# EUROPEAN PATENT APPLICATION

(11) **EP 3 974 239 A1**
(43) Date of publication of application: **30.03.2022**
(21) Application number: 21196297.2
(22) Date of filing: 13.09.2021
(51) Int. Cl.: B60L 53/14, B60L 53/10, B60L 58/21, B60L 53/16, B60L 58/19, B60L 53/22, H01M 10/44, H01M 50/502, H02J 7/00, H02J 7/02, H02J 7/14

(54) **ELECTRIC POWER SUPPLY SYSTEM COMPRISING A FIRST AND A SECOND BATTERY IN A VEHICLE**

(30) Priority: 28.09.2020 JP 2020161645
(71) Applicant: Yazaki Corporation, Minato-ku Tokyo 108-8333 (JP)
(72) Inventor: Oishi, Eiichiro, Susono-shi, Shizuoka (JP); Sugimura, Kazuo, Susono-shi, Shizuoka (JP); Tsubaki, Kazuya, Susono-shi, Shizuoka (JP); Morimoto, Mitsuaki, Susono-shi, Shizuoka (JP)
(74) Representative: Grünecker Patent- und Rechtsanwälte PartG mbB

(57) **Abstract**

In an electric power supply system (1), a first supply system (P) can supply electric power from a first battery (10) to a first load unit (LD1) via a front power supply box (20). A second supply system (Q) can supply electric power from a second battery (30) to a second load unit (LD2) via a rear power supply box (40) independently of the first supply system (P). A front inlet (51) can supply electric power from an external charging device (108) to the first battery (10) side. A rear inlet (52) can supply electric power from an external charging device (107) to the second battery (30) side. A charging branch box (60) is connected to each of the first supply system (P), the second supply system (Q), the front inlet (51), and the rear inlet (52), and can switch a mutual connection relation between the first supply system (P), the second supply system (Q), the front inlet (51), and the rear inlet (52) .

## Description

### BACKGROUND OF THE INVENTION

### 1. Field of the Invention

The present invention relates to an electric power supply system.

### 2. Description of the Related Art

In the related art, as an electric power supply system, for example, a vehicle including a plurality of high-voltage batteries for supplying electric power to a front wheel drive motor and a rear wheel drive motor, and an electric power conversion unit that converts electric power in a case where electric power is supplied to each of the above motors from the plurality of high-voltage batteries is described in Japanese Patent No. 6706507.

In the above described power supply system, for example, during charging of the high-voltage batteries via a charging inlet, it is necessary to switch the connection between the charging inlet and the high-voltage batteries. However, switching the connection thereof tends to be complicated, and there is room for further improvement in this regard.

### SUMMARY OF THE INVENTION

The present invention has been made in view of the above description, and an object of the present invention is to provide an electric power supply system through which an electric power supply system can be properly configured.

In order to achieve the above mentioned object, an electric power supply system according to one aspect of the present invention includes a first supply system including a first battery provided in a vehicle and capable of being charged and discharged with electric power, and a first battery switching unit capable of switching a connection between the first battery and a first load unit, electric power being capable of supplying from the first battery to the first load unit via the first battery switching unit; a second supply system including a second battery provided in the vehicle and capable of being charged and discharged with electric power, and a second battery switching unit capable of switching a connection between the second battery and a second load unit different from the first load unit, electric power being capable of supplying from the second battery to the second load unit via the second battery switching unit independently of the first supply system; a first charging inlet capable of connecting to a charger and capable of supplying electric power from the charger to at least a side of the first battery; a second charging inlet capable of connecting to a charger and capable of supplying electric power from the charger to at least a side of the second battery; and a connection switching unit to which each of the first supply system, the second supply system, the first charging inlet, and the second charging inlet is connected and that is capable of switching a mutual connection relation between the first supply system, the second supply system, the first charging inlet, and the second charging inlet.

According to another aspect of the present invention, in the electric power supply system, it is desirable that the connection switching unit is capable of switching between a single charging connection mode and a dual charging connection mode by switching a connection relation between the first supply system, the second supply system, the first charging inlet, and the second charging inlet, in the single charging connection mode, in a state of the charger being connected to both the first charging inlet and the second charging inlet, the first battery is singly charged with electric power supplied from the first charging inlet and the second battery is singly charged with electric power supplied from the second charging inlet, and in the dual charging connection mode, in a state of the charger being connected to any one of the first charging inlet and the second charging inlet, both the first battery and the second battery are charged with electric power supplied from the one.

According to still another aspect of the present invention, in the electric power supply system, it is desirable that the connection switching unit is capable of switching between an independent supplying mode and a mutual interchange mode by switching a connection relation between the first supply system, the second supply system, the first charging inlet, and the second charging inlet, in the independent supplying mode, the first supply system and the second supply system are not connected to each other and electric power is not supplied from one of the first supply system and the second supply system to the other, and in the mutual interchange mode, the first supply system and the second supply system are connected to each other and electric power is supplied from one of the first supply system and the second supply system to the other.

According to still another aspect of the present invention, in the electric power supply system, it is desirable that the first supply system is provided on a front side in a front-rear direction of the vehicle, the second supply system is provided on a rear side with respect to the first supply system in the front-rear direction, the first charging inlet is provided on a front side in the front-rear direction of the vehicle, and the second charging inlet is provided on a rear side with respect to the first charging inlet in the front-rear direction.

The above and other objects, features, advantages and technical and industrial significance of this invention will be better understood by reading the following detailed description of presently preferred embodiments of the invention, when considered in connection with the accompanying drawings.

### BRIEF DESCRIPTION OF THE DRAWINGS

FIG. 1 is a block diagram illustrating a configuration example of an electric power supply system according to a first embodiment;
FIG. 2 is a block diagram illustrating a configuration example of a battery pack according to the first embodiment;
FIG. 3 is a view illustrating an installation example of a battery pack having an intermediate capacity according to the first embodiment;
FIG. 4 is a perspective view illustrating a configuration example of the battery pack having an intermediate capacity according to the first embodiment;
FIG. 5 is a view illustrating an installation example of a battery pack having a large capacity according to the first embodiment;
FIG. 6 is a perspective view illustrating a configuration example of the battery pack having a large capacity according to the first embodiment;
FIG. 7 is a diagram illustrating a routing example of a wire harness according to a comparative example;
FIG. 8 is a diagram illustrating a routing example of a wire harness according to the first embodiment;
FIG. 9 is a block diagram illustrating a charging example in a single charging connection mode according to the first embodiment;
FIG. 10 is a block diagram illustrating a charging example in a dual charging connection mode according to the first embodiment;
FIG. 11 is a block diagram illustrating an operation example in a case where a second battery is abnormal according to the first embodiment;
FIG. 12 is a block diagram illustrating an operation example in a case where a first main relay fails according to the first embodiment;
FIG. 13 is a flowchart illustrating a battery charging example of the electric power supply system according to the first embodiment;
FIG. 14 is a block diagram illustrating a configuration example of an electric power supply system according to a second embodiment;
FIG. 15 is a block diagram illustrating an equalization process of a first battery and a second battery according to the second embodiment;
FIG. 16 is a block diagram illustrating an operation example in a case where the second battery is abnormal according to the second embodiment; and
FIG. 17 is a flowchart illustrating an operation example of the electric power supply system according to the second embodiment.

### DETAILED DESCRIPTION OF THE PREFERRED EMBODIMENTS

The forms (embodiments) for carrying out the present invention will be described in detail with reference to the drawings. The present invention is not limited to the contents described in the following embodiments. In addition, the components described below include components that can be easily assumed by those skilled in the art and that are substantially the same. Furthermore, the configurations described below can be combined as appropriate. In addition, various omissions, substitutions, or changes of the configurations can be made without departing from the gist of the present invention.

### First Embodiment

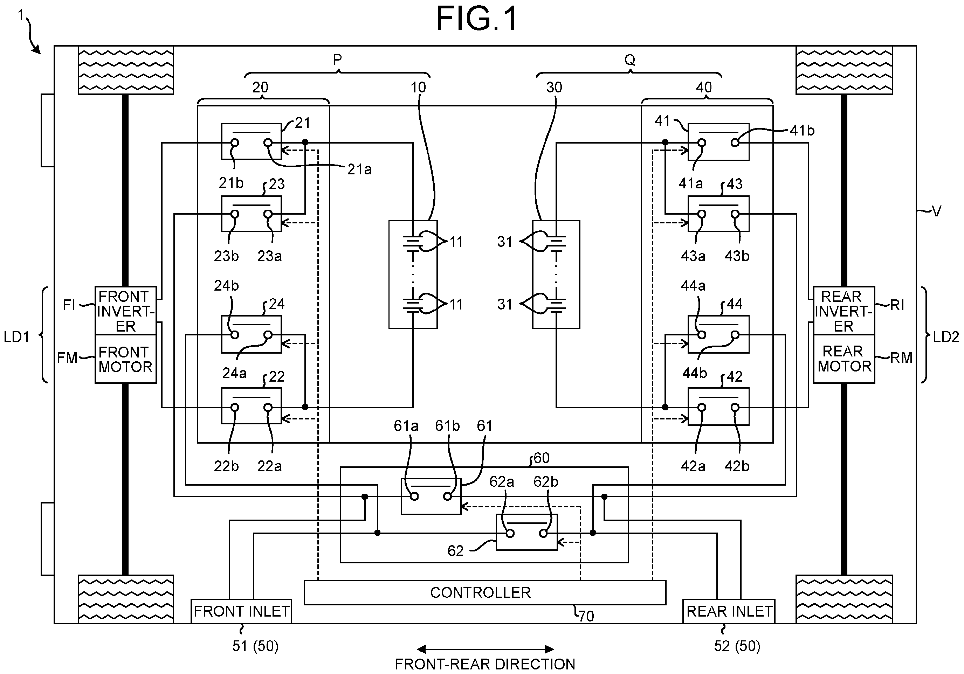

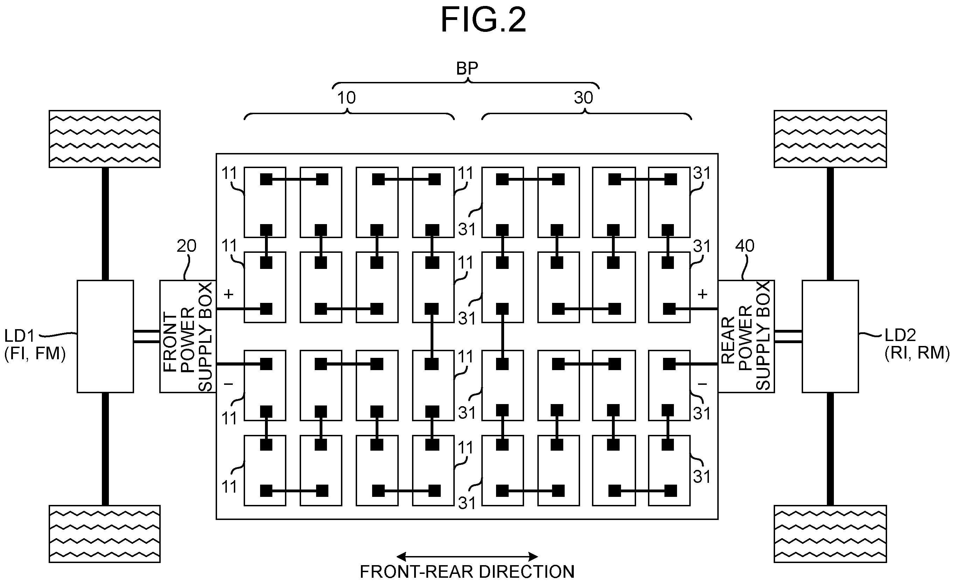

An electric power supply system 1 according to an embodiment will be described with reference to the drawings. FIG. 1 is a block diagram illustrating a configuration example of the electric power supply system 1 according to a first embodiment. FIG. 2 is a block diagram illustrating a configuration example of a battery pack BP according to the first embodiment.

The electric power supply system 1 according to the embodiment is mounted on, for example, an electric motor vehicle (vehicle) V such as electric vehicles (EVs), charges electric power supplied by an external charging device, and supplies the charged electric power to a load unit.

Here, in the following description, the direction along the front and rear of the vehicle V is referred to as a front-rear direction. It can be said that the front-rear direction is referred to as a straight direction that is the direction along which the vehicle V travels straight or a whole length direction that is the direction over a total length of the vehicle V.

For example, as illustrated in FIG. 1, the vehicle V is provided with a front inverter FI and a front motor FM as a first load unit LD1, which are disposed on the front side of the vehicle V in the front-rear direction. The front inverter FI is connected to a front power supply box 20 described later, and converts the direct current electric power supplied from the front power supply box 20 into the alternate current electric power. The front inverter FI supplies the converted alternate current electric power to the front motor FM. The front motor FM is driven by the electric power supplied from the front inverter FI and rotates front wheels via drive shafts of the vehicle V or the like. The vehicle V is further provided with a rear inverter RI and a rear motor RM as a second load unit LD2 different from the first load unit LD1, which are disposed on the rear side of the vehicle V in the front-rear direction. The rear inverter RI is connected to a rear power supply box 40 described later, and converts the direct current electric power supplied from the rear power supply box 40 into the alternate current electric power. The rear inverter RI supplies the converted alternate current electric power to the rear motor RM. The rear motor RM is driven by the electric power supplied from the rear inverter RI and rotates rear wheels via drive shafts of the vehicle V or the like.

The electric power supplied by an external charging device is charged, and the charged electric power is supplied to each of the load unit LD1 and the load unit LD2 through the electric power supply system 1 according to the embodiment. Hereinafter, the electric power supply system 1 will be described in detail.

As illustrated in FIG. 1, the electric power supply system 1 includes a first supply system P, a second supply system Q, a charging port 50, a charging branch box 60, and a controller 70.

The first supply system P is provided on the front side of the vehicle V in the front-rear direction, and provided for supplying electric power to the first load unit LD1 such as the front inverter FI. The first supply system P is provided independently of the second supply system Q, and can independently supply the electric power to the first load unit LD1. In other words, the electric power is supplied to the first load unit LD1 from the first supply system P, but the electric power is not supplied from the second supply system Q. The first supply system P includes a first battery 10 and a front power supply box 20 as a first battery switching unit.

The first battery 10 is a storage battery capable of being charged and discharged with electric power. The first battery 10 has a plurality of battery cells 11. Each battery cell 11 is formed of a storage battery capable of being charged and discharged, and formed of, for example, a lithium ion battery. As illustrated in FIG. 2, the battery cells 11 are each disposed side by side and connected in series with the adjacent battery cells 11 to form one battery series assembly. The first batteries 10 constitute a battery pack BP together with second batteries 30 described later. Each of a positive electrode terminal and a negative electrode terminal of the battery series assembly in the first battery 10 is provided on the front power supply box 20 side. That is, in the first battery 10, each of the positive electrode terminal and the negative electrode terminal of the battery series assembly is provided on the front side of the vehicle V in the front-rear direction. In the first battery 10, the positive electrode terminal of the battery series assembly is connected to a first main relay 21 and a first charging relay 23 of the front power supply box 20 described later, and the negative electrode terminal of the battery series assembly is connected to a second main relay 22 and a second charging relay 24 of the front power supply box 20 described later. The first battery 10 supplies electric power to the first load unit LD1 via the front power supply box 20, and does not supply electric power to the second load unit LD2.

The front power supply box 20 can switch a current path. The front power supply box 20 can switch a current path (connection) between the first battery 10 and the first load unit LD1, and can switch a current path (connection) between the first battery 10 and the charging branch box 60, for example. The front power supply box 20 includes the first main relay 21, the second main relay 22, the first charging relay 23, and the second charging relay 24.

The first main relay 21 is configured to switch an electrical connection and to include a first contact 21a and a second contact 21b. The first contact 21a is connected to the positive electrode terminal of the first battery 10, and the second contact 21b is connected to the first terminal of the front inverter FI. The first main relay 21 electrically connects the first contact 21a and the second contact 21b, that is, the first main relay 21 is turned ON to energize a current flowing between the positive electrode terminal of the first battery 10 and the first terminal of the front inverter FI. On the other hand, the first main relay 21 electrically disconnects the first contact 21a from the second contact 21b, that is, the first main relay 21 is turned OFF to shut off a current flowing between the positive electrode terminal of the first battery 10 and the first terminal of the front inverter FI. The first main relay 21 is turned ON or OFF based on a control signal output from the controller 70.

The second main relay 22 is configured to switch an electrical connection and include a first contact 22a and a second contact 22b. The first contact 22a is connected to the negative electrode terminal of the first battery 10, and the second contact 22b is connected to the second terminal of the front inverter FI. The second main relay 22 electrically connects the first contact 22a and the second contact 22b, that is, the second main relay 22 is turned ON to energize a current flowing between the negative electrode terminal of the first battery 10 and the second terminal of the front inverter FI. On the other hand, the second main relay 22 electrically disconnects the first contact 22a from the second contact 22b, that is, the second main relay 22 is turned OFF to shut off a current flowing between the negative electrode terminal of the first battery 10 and the second terminal of the front inverter FI. The second main relay 22 is turned ON or OFF based on a control signal output from the controller 70.

Next, the charging relay will be described. The first charging relay 23 is configured to switch an electrical connection and include a first contact 23a and a second contact 23b. The first contact 23a is connected to the positive electrode terminal of the first battery 10, and the second contact 23b is connected to a front inlet 51 and the charging branch box 60. The first charging relay 23 electrically connects the first contact 23a and the second contact 23b, that is, the first charging relay 23 is turned ON to energize a current flowing between the positive electrode terminal of the first battery 10 and the front inlet 51 and the charging branch box 60. On the other hand, the first charging relay 23 electrically disconnects the first contact 23a from the second contact 23b, that is, the first charging relay 23 is turned OFF to shut off a current flowing between the positive electrode terminal of the first battery 10 and the front inlet 51 and the charging branch box 60. The first charging relay 23 is turned ON or OFF based on a control signal output from the controller 70.

The second charging relay 24 is configured to switch an electrical connection and include a first contact 24a and a second contact 24b. The first contact 24a is connected to the negative electrode terminal of the first battery 10, and the second contact 24b is connected to a front inlet 51 and the charging branch box 60. The second charging relay 24 electrically connects the first contact 24a and the second contact 24b, that is, the second charging relay 24 is turned ON to energize a current flowing between the negative electrode terminal of the first battery 10 and the front inlet 51 and the charging branch box 60. On the other hand, the second charging relay 24 electrically disconnects the first contact 24a from the second contact 24b, that is, the second charging relay 24 is turned OFF to shut off a current flowing between the negative electrode terminal of the first battery 10 and the front inlet 51 and the charging branch box 60. The second charging relay 24 is turned ON or OFF based on a control signal output from the controller 70.

The first supply system P configured as described above turns the first main relay 21 and the second main relay 22 ON and turns the first charging relay 23 and the second charging relay 24 OFF, so that electric power is supplied from the first battery 10 to the first load unit LD1 via the front power supply box 20 and is not supplied to the second load unit LD2. A charging process of the first battery 10 will be described later.

Next, the second supply system Q will be described. The second supply system Q is provided on a rear side with respect to the first supply system P in the front-rear direction of the vehicle V, and provided for supplying electric power to the second load unit LD2 such as the rear inverter RI. The second supply system Q is provided independently of the first supply system P, and can independently supply the electric power to the second load unit LD2. In other words, the electric power is supplied to the second load unit LD2 from the second supply system Q, but the electric power is not supplied from the first supply system P. The second supply system Q includes a second battery 30 and a rear power supply box 40 as a second battery switching unit.

The second battery 30 is a storage battery capable of being charged and discharged with electric power. The second battery 30 has a plurality of battery cells 31. Each battery cell 31 is formed of a storage battery capable of being charged and discharged, and formed of, for example, a lithium ion battery. As illustrated in FIG. 2, the battery cells 31 are each disposed side by side and connected in series with the adjacent battery cells 31 to form one battery series assembly. The second batteries 30 constitute the battery pack BP together with the first batteries 10. Each of a positive electrode terminal and a negative electrode terminal of the battery series assembly in the second battery 30 is provided on the rear power supply box 40 side. That is, in the second battery 30, each of the positive electrode terminal and the negative electrode terminal of the battery series assembly is provided on the rear side of the vehicle V in the front-rear direction. In the second battery 30, the positive electrode terminal of the battery series assembly is connected to a first main relay 41 and a first charging relay 43 of the rear power supply box 40 described later, and the negative electrode terminal of the battery series assembly is connected to a second main relay 42 and a second charging relay 44 of the rear power supply box 40 described later. The second battery 30 supplies electric power to the second load unit LD2 via the rear power supply box 40, and does not supply electric power to the first load unit LD1.

The rear power supply box 40 can switch a current path. The rear power supply box 40 can switch a current path (connection) between the second battery 30 and the second load unit LD2 such as the rear inverter RI, and can switch a current path (connection) between the second battery 30 and the charging branch box 60, for example. The rear power supply box 40 includes the first main relay 41, the second main relay 42, the first charging relay 43, and the second charging relay 44.

The first main relay 41 is configured to switch an electrical connection and include a first contact 41a and a second contact 41b. The first contact 41a is connected to the positive electrode terminal of the second battery 30, and the second contact 41b is connected to the first terminal of the rear inverter RI. The first main relay 41 electrically connects the first contact 41a and the second contact 41b, that is, the first main relay 41 is turned ON to energize a current flowing between the positive electrode terminal of the second battery 30 and the first terminal of the rear inverter RI. On the other hand, the first main relay 41 electrically disconnects the first contact 41a from the second contact 41b, that is, the first main relay 41 is turned OFF to shut off a current flowing between the positive electrode terminal of the second battery 30 and the first terminal of the rear inverter RI. The first main relay 41 is turned ON or OFF based on a control signal output from the controller 70.

The second main relay 42 is configured to switch an electrical connection and include a first contact 42a and a second contact 42b. The first contact 42a is connected to the negative electrode terminal of the second battery 30, and the second contact 42b is connected to the second terminal of the rear inverter RI. The second main relay 42 electrically connects the first contact 42a and the second contact 42b, that is, the second main relay 42 is turned ON to energize a current flowing between the negative electrode terminal of the second battery 30 and the second terminal of the rear inverter RI. On the other hand, the second main relay 42 electrically disconnects the first contact 42a from the second contact 42b, that is, the second main relay 42 is turned OFF to shut off a current flowing between the negative electrode terminal of the second battery 30 and the second terminal of the rear inverter RI. The second main relay 42 is turned ON or OFF based on a control signal output from the controller 70.

Next, the charging relay will be described. The first charging relay 43 is configured to switch an electrical connection and include a first contact 43a and a second contact 43b. The first contact 43a is connected to the positive electrode terminal of the second battery 30, and the second contact 43b is connected to a rear inlet 52 and the charging branch box 60. The first charging relay 43 electrically connects the first contact 43a and the second contact 43b, that is, the first charging relay 43 is turned ON to energize a current flowing between the positive electrode terminal of the second battery 30 and the rear inlet 52 and the charging branch box 60. On the other hand, the first charging relay 43 electrically disconnects the first contact 43a from the second contact 43b, that is, the first charging relay 43 is turned OFF to shut off a current flowing between the positive electrode terminal of the second battery 30 and the rear inlet 52 and the charging branch box 60. The first charging relay 43 is turned ON or OFF based on a control signal output from the controller 70.

The second charging relay 44 is configured to switch an electrical connection and include a first contact 44a and a second contact 44b. The first contact 44a is connected to the negative electrode terminal of the second battery 30, and the second contact 44b is connected to the rear inlet 52 and the charging branch box 60. The second charging relay 44 electrically connects the first contact 44a and the second contact 44b, that is, the second charging relay 44 is turned ON to energize a current flowing between the negative electrode terminal of the second battery 30 and the rear inlet 52 and the charging branch box 60. On the other hand, the second charging relay 44 electrically disconnects the first contact 44a from the second contact 44b, that is, the second charging relay 44 is turned OFF to shut off a current flowing between the negative electrode terminal of the second battery 30 and the rear inlet 52 and the charging branch box 60. The second charging relay 44 is turned ON or OFF based on a control signal output from the controller 70.

The second supply system Q configured as described above turns the first main relay 41 and the second main relay 42 ON and turns the first charging relay 43 and the second charging relay 44 OFF, so that electric power is supplied from the second battery 30 to the second load unit LD2 via the rear power supply box 40 and is not supplied to the first load unit LD1. A charging process of the second battery 30 will be described later.

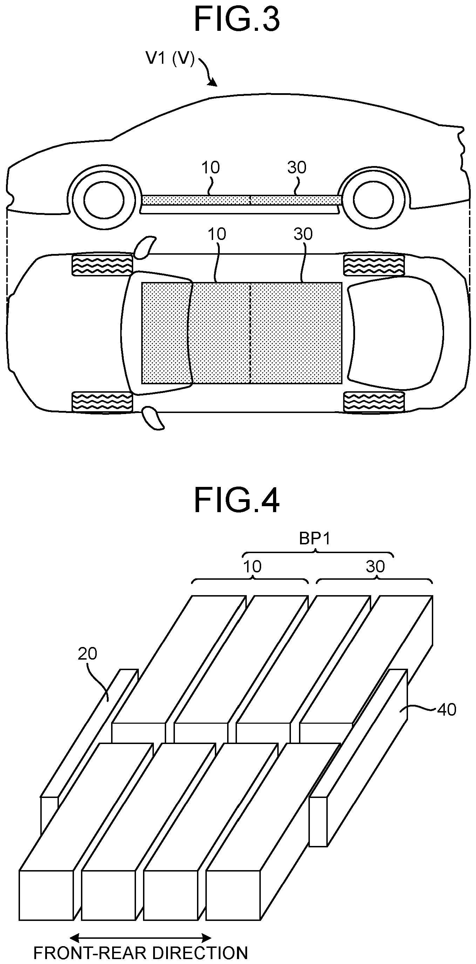

Next, the battery pack BP formed with the first batteries 10 and the second batteries 30 will be described. The battery pack BP is formed by an assembly of the first batteries 10 and the second batteries 30, and is disposed beneath a floor of the vehicle V. FIG. 3 is a view illustrating an installation example of a battery pack BP1 having an intermediate capacity according to the first embodiment. FIG. 4 is a perspective view illustrating a configuration example of the battery pack BP1 having an intermediate capacity according to the first embodiment. As illustrated in FIG. 3, the battery pack BP1 having an intermediate capacity is mounted on the first vehicle V1 and is disposed beneath a floor of the first vehicle V1. Here, the first vehicle V1 is typically a popular vehicle having an average battery capacity. As illustrated in FIG. 4, the front power supply box 20 is disposed on the front side in the front-rear direction of the battery pack BP1 having an intermediate capacity, and is typically disposed on a side surface of the front side of the battery pack BP1 having an intermediate capacity. The rear power supply box 40 is disposed on the rear side of the battery pack BP1 having an intermediate capacity in the front-rear direction, and is typically disposed on a side surface of the rear side of the battery pack BP1 having an intermediate capacity. As described above, the battery pack BP1 having an intermediate capacity is disposed to be sandwiched between both sides of the front power supply box 20 and the rear power supply box 40 in the front-rear direction of the first vehicle V1. The front power supply box 20 and the rear power supply box 40 have heights in a height direction thereof, which are set to be equal to or lower than a height of the battery pack BP1 having an intermediate capacity to secure a space in the vehicle cabin, and can be disposed beneath the floor of the first vehicle V1 together with the battery pack BP1 having an intermediate capacity.

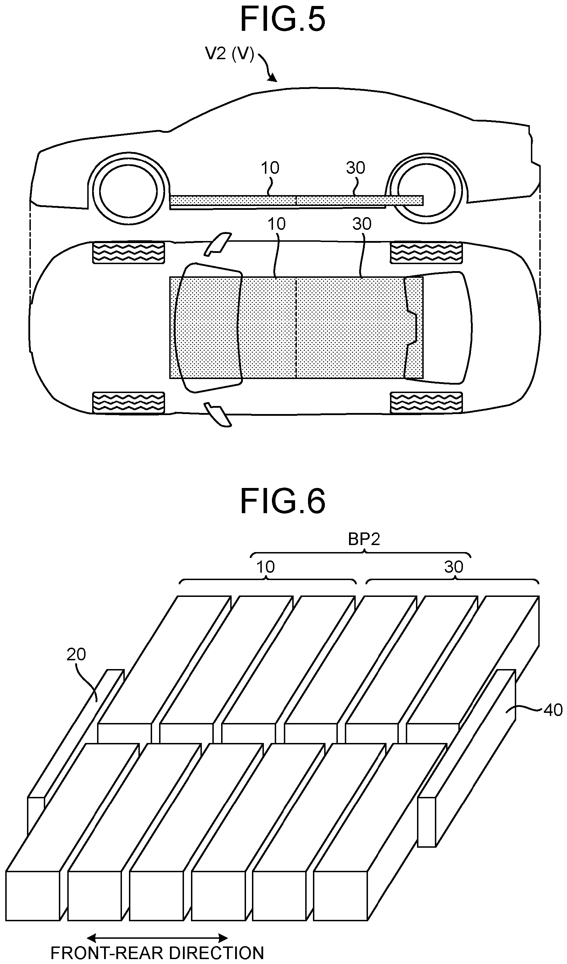

Next, a battery pack BP2 having a large capacity will be described. FIG. 5 is a view illustrating an installation example of the battery pack BP2 having a large capacity according to the first embodiment. FIG. 6 is a perspective view illustrating a configuration example of the battery pack BP2 having a large capacity according to the first embodiment. As illustrated in FIG. 5, the battery pack BP2 having a large capacity is mounted on the second vehicle V2 and is disposed beneath a floor of the second vehicle V2. Here, the second vehicle V2 is typically a luxury vehicle having a relatively large battery capacity. The battery pack BP2 having a large capacity has a larger battery capacity than the battery pack BP1 having an intermediate capacity, and the physique of the battery pack BP2 is larger than that of the battery pack BP1 having an intermediate capacity. The battery pack BP2 having a large capacity is formed to extend in the front-rear direction longer than the battery pack BP1 having an intermediate capacity. As illustrated in FIG. 6, the front power supply box 20 is disposed on the front side in the front-rear direction of the battery pack BP2 having a large capacity, and is typically disposed on a side surface of the front side of the battery pack BP2 having a large capacity. The rear power supply box 40 is disposed on the rear side of the battery pack BP2 having a large capacity in the front-rear direction, and is typically disposed on a side surface of the rear side of the battery pack BP2 having a large capacity. As described above, the battery pack BP2 having a large capacity is disposed to be sandwiched between both sides of the front power supply box 20 and the rear power supply box 40 in the front-rear direction of the second vehicle V2. The front power supply box 20 and the rear power supply box 40 have heights in a height direction thereof, which are set to be equal to or lower than a height of the battery pack BP2 having a large capacity to secure a space in the vehicle cabin, and can be disposed beneath the floor of the second vehicle V2 together with the battery pack BP2 having a large capacity. The electric power supply system 1 can be adapted to the second vehicle V2 by the front power supply box 20 and the rear power supply box 40 being assembled to the battery pack BP2 having a large capacity, and can be flexibly adapted to the vehicle V having the different vehicle physique.

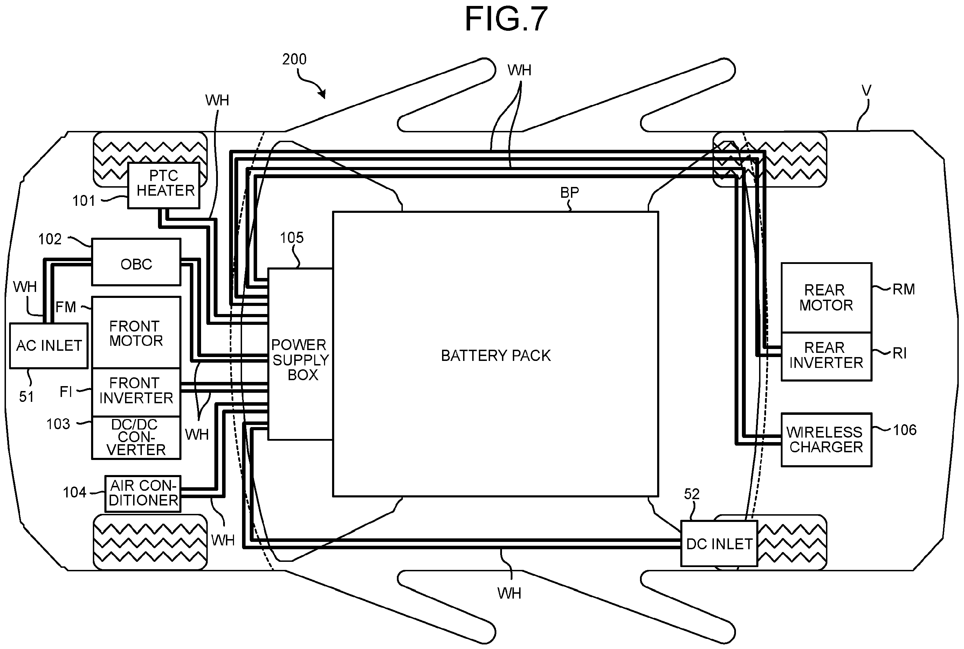

Next, a routing example of a wire harness WH will be described. FIG. 7 is a diagram illustrating a routing example of the wire harness WH according to a comparative example. An electric power supply system 200 according to the comparative example is different from the electric power supply system 1 according to the first embodiment in that a power supply box 105 is provided on the front side in the front-rear direction of the vehicle V and is not provided on the rear side in the front-rear direction of the vehicle V. The vehicle V illustrated in FIG. 7 is further provided with electronic components such as a positive temperature coefficient (PTC) heater 101, an on board charger (OBC) 102, a DC/DC converter 103, an air conditioner 104, and a wireless charger 106, which are connected to one another via the wire harness WH. The PTC heater 101 warms the inside of the vehicle cabin by a heating element that generates heat with a current flowing. The OBC 102 converts the alternate current electric power into the direct current electric power. The DC/DC converter 103 transforms a voltage of the direct current electric power. The air conditioner 104 adjusts air conditioning inside the vehicle cabin. The wireless charger 106 performs charging with electric power in a noncontact manner. In the electric power supply system 200 according to the comparative example, since the power supply box 105 is provided at one location of the vehicle V, a connection distance of the wire harness WH that connects the power supply box 105 with each electronic component is long, which tends to cause deterioration of routing performance or lack of space in the vehicle. In the electric power supply system 200 according to the comparative example, the wire harness WH is required to be routed from the front side to the rear side of the vehicle V, particularly in a case of connecting the power supply box 105 with the rear inverter RI via the wire harness WH, and the deterioration of routing performance becomes remarkable.

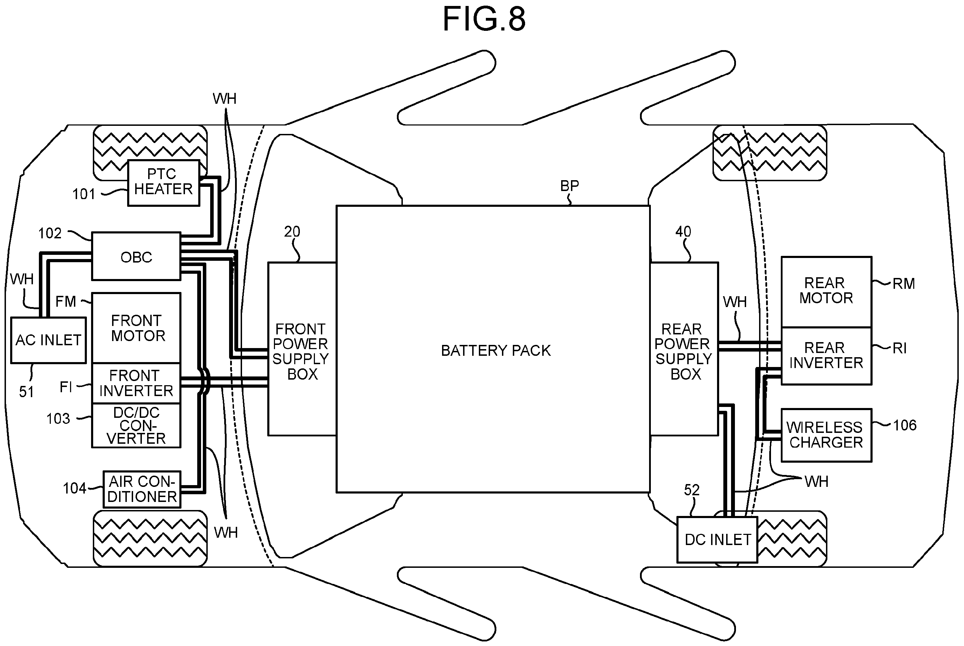

On the other hand, as illustrated in FIG. 8, since the electric power supply system 1 according to the first embodiment includes the front power supply box 20 and the rear power supply box 40, a connection distance of the wire harness WH that connects the front power supply box 20 and the rear power supply box 40 with each electronic component is shorter than that of the electric power supply system 200 according to the comparative example, so that a routing layout can be simplified. An example is illustrated in FIG. 8 (FIG. 7) in which an AC inlet is provided as the front inlet 51 and a DC inlet is provided as the rear inlet 52.

Next, the charging port 50 will be described. The charging port 50 is an inlet to which external charging devices 107 and 108 as chargers are connected. The charging port 50 includes the front inlet 51 and the rear inlet 52.

The front inlet 51 is provided on the front side with respect to the rear inlet 52 in the front-rear direction of the vehicle V, and is disposed in the vicinity of the front power supply box 20. The front inlet 51 is, for example, a DC inlet, and a plug 108a of the external charging device 108 that supplies the direct current electric power can be connected to the front inlet 51. The front inlet 51 is connected to the charging branch box 60, and electric power supplied from the external charging device 108 can be independently supplied to the first battery 10 via the charging branch box 60 and the front power supply box 20 through the front inlet 51. In addition, the front inlet 51 can supply the electric power from the external charging device 108 to be supplied to the first battery 10 via the charging branch box 60 and the front power supply box 20, and also supply the electric power to the second battery 30 via the charging branch box 60 and the rear power supply box 40.

The rear inlet 52 is provided on the rear side with respect to the front inlet 51 in the front-rear direction of the vehicle V, and is disposed in the vicinity of the rear power supply box 40. The rear inlet 52 is, for example, a DC inlet, and a plug 107a of the external charging device 107 that supplies the direct current electric power can be connected to the rear inlet 52. The rear inlet 52 is connected to the charging branch box 60, and electric power supplied from the external charging device 107 can be independently supplied to the second battery 30 via the charging branch box 60 and the rear power supply box 40 through the rear inlet 52. In addition, the rear inlet 52 can supply the electric power from the external charging device 107 to be supplied to the second battery 30 via the charging branch box 60 and the rear power supply box 40, and also supply the electric power to the first battery 10 via the charging branch box 60 and the front power supply box 20.

Next, the charging branch box 60 will be described. The charging branch box 60 can switch a mutual connection relation between the first supply system P, the second supply system Q, the front inlet 51, and the rear inlet 52. The charging branch box 60 includes a first branch relay 61 and a second branch relay 62.

The first branch relay 61 is configured to switch an electrical connection and include a first contact 61a and a second contact 61b. The first contact 61a is connected to the second contact 23b of the first charging relay 23 of the front power supply box 20, and the second contact 61b is connected to the second contact 43b of the first charging relay 43 of the rear power supply box 40. The first branch relay 61 electrically connects the first contact 61a and the second contact 61b, that is, the first branch relay 61 is turned ON to connect the first charging relay 23 of the front power supply box 20 and the first charging relay 43 of the rear power supply box 40. Therefore, the first branch relay 61 can connect the positive electrode terminal of the first battery 10 and the positive electrode terminal of the second battery 30. On the other hand, the first branch relay 61 electrically disconnects the first contact 61a and the second contact 61b, that is, the first branch relay 61 is turned OFF, so that the first charging relay 23 of the front power supply box 20 and the first charging relay 43 of the rear power supply box 40 are disconnected from each other. Therefore, the first branch relay 61 can disconnect the positive electrode terminal of the first battery 10 and the positive electrode terminal of the second battery 30. The first branch relay 61 is turned ON or OFF based on a control signal output from the controller 70.

The second branch relay 62 is configured to switch an electrical connection and include a first contact 62a and a second contact 62b. The first contact 62a is connected to the second contact 24b of the second charging relay 24 of the front power supply box 20, and the second contact 62b is connected to the second contact 44b of the second charging relay 44 of the rear power supply box 40. The second branch relay 62 electrically connects the first contact 62a and the second contact 62b, that is, the second branch relay 62 is turned ON to connect the second charging relay 24 of the front power supply box 20 and the second charging relay 44 of the rear power supply box 40. Therefore, the second branch relay 62 can connect the negative electrode terminal of the first battery 10 and the negative electrode terminal of the second battery 30. On the other hand, the second branch relay 62 electrically disconnects the first contact 62a and the second contact 62b, that is, the second branch relay 62 is turned OFF, so that the second charging relay 24 of the front power supply box 20 and the second charging relay 44 of the rear power supply box 40 are disconnected from each other. Therefore, the second branch relay 62 can disconnect the negative electrode terminal of the first battery 10 and the negative electrode terminal of the second battery 30. The second branch relay 62 is turned ON or OFF based on a control signal output from the controller 70.

The charging branch box 60 configured as described above connects each of the first supply system P including the first battery 10, the second supply system Q including the second battery 30, the front inlet 51, and the rear inlet 52 by turning the first branch relay 61 and the second branch relay 62 ON. For example, by turning the first branch relay 61 and the second branch relay 62 ON, the charging branch box 60 can connect the first battery 10 of the first supply system P and the second battery 30 of the second supply system Q in parallel. In addition, the charging branch box 60 can supply electric power supplied from either the front inlet 51 or the rear inlet 52 to the first battery 10 and the second battery 30 connected in parallel.

On the other hand, the charging branch box 60 electrically disconnects the first supply system P and the second supply system Q from each other by turning the first branch relay 61 and the second branch relay 62 OFF, so that each of the first supply system P and the second supply system Q becomes an independent supply system. In addition, the charging branch box 60 supplies electric power supplied from the front inlet 51 to the first battery 10 of the first supply system P without supplying the electric power to the second battery 30 of the second supply system Q, and supplies electric power supplied from the rear inlet 52 to the second battery 30 of the second supply system Q without supplying the electric power to the first battery 10 of the first supply system P.

The controller 70 controls the front power supply box 20, the rear power supply box 40, and the charging branch box 60. The controller 70 outputs, for example, a control signal to the front power supply box 20, switches each relay of the front power supply box 20 to ON or OFF, outputs a control signal to the rear power supply box 40, switches each relay of the rear power supply box 40 to ON or OFF, outputs a control signal to the charging branch box 60, and switches each relay of the charging branch box 60 to ON or OFF. In a case where the first battery 10 and the second battery 30 are charged, for example, the controller 70 switches the connection relation to a single charging connection mode or a dual charging connection mode. Here, the single charging connection mode is a mode in which each of the batteries 10 and 30 is individually charged from each of the inlets 51 and 52. The dual charging connection mode is a mode in which both the batteries 10 and 30 are charged through any one of the inlets 51 and 52.

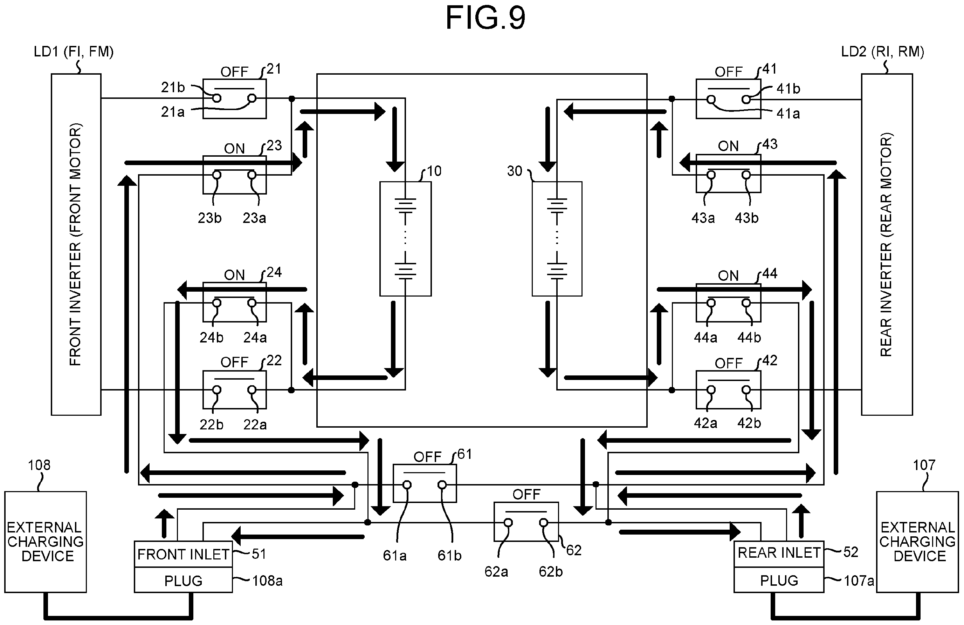

The controller 70 controls the charging branch box 60 and switches the connection relation between the first supply system P, the second supply system Q, the front inlet 51, and the rear inlet 52 to execute the single charging connection mode. FIG. 9 is a block diagram illustrating a charging example in the single charging connection mode according to the first embodiment. For example, as illustrated in FIG. 9, the controller 70 outputs control signals to the front power supply box 20, the rear power supply box 40, and the charging branch box 60 to turn the first charging relay 23 and the second charging relay 24 ON and turn the first main relay 21 and the second main relay 22 OFF in the front power supply box 20, and turn the first charging relay 43 and the second charging relay 44 ON and turn the first main relay 41 and the second main relay 42 OFF in the rear power supply box 40, and turn the first branch relay 61 and the second branch relay 62 OFF in the charging branch box 60, thereby the single charging connection mode being executed. Therefore, the controller 70 can independently charge the first battery 10 with the electric power through the front inlet 51 and can independently charge the second battery 30 with the electric power through the rear inlet 52 in a state in which the external charging device 108 is connected to the front inlet 51 and the external charging device 107 is connected to the rear inlet 52.

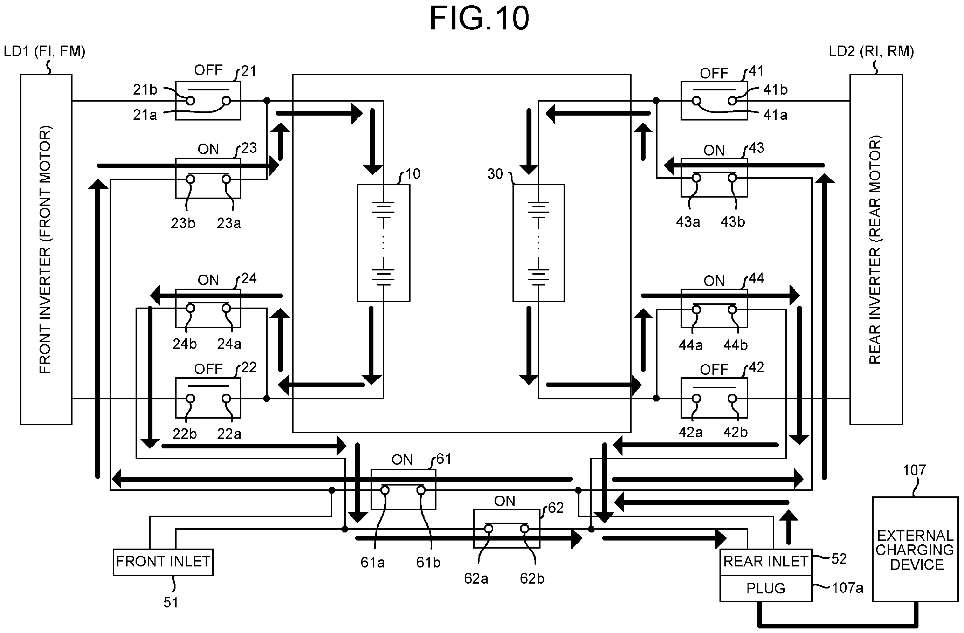

The controller 70 controls the charging branch box 60 and switches the connection relation between the first supply system P, the second supply system Q, the front inlet 51, and the rear inlet 52 to execute the dual charging connection mode. FIG. 10 is a block diagram illustrating a charging example in the dual charging connection mode according to the first embodiment. For example, as illustrated in FIG. 10, the controller 70 outputs control signals to the front power supply box 20, the rear power supply box 40, and the charging branch box 60 to turn the first charging relay 23 and the second charging relay 24 ON and turn the first main relay 21 and the second main relay 22 OFF in the front power supply box 20, and turn the first charging relay 43 and the second charging relay 44 ON and turn the first main relay 41 and the second main relay 42 OFF in the rear power supply box 40, and turn the first branch relay 61 and the second branch relay 62 ON in the charging branch box 60, thereby the dual charging connection mode being executed. Therefore, in a state in which the external charging devices 107 and 108 are connected to either the front inlet 51 or the rear inlet 52, the controller 70 can charge both the first battery 10 and the second battery 30 with the electric power from either one of the front inlet 51 or the rear inlet 52. The example illustrated in FIG. 10 represents an example in which the controller 70 charges both the first battery 10 and the second battery 30 with the electric power supplied through the rear inlet 52 in a state in which the external charging device 107 is connected to the rear inlet 52.

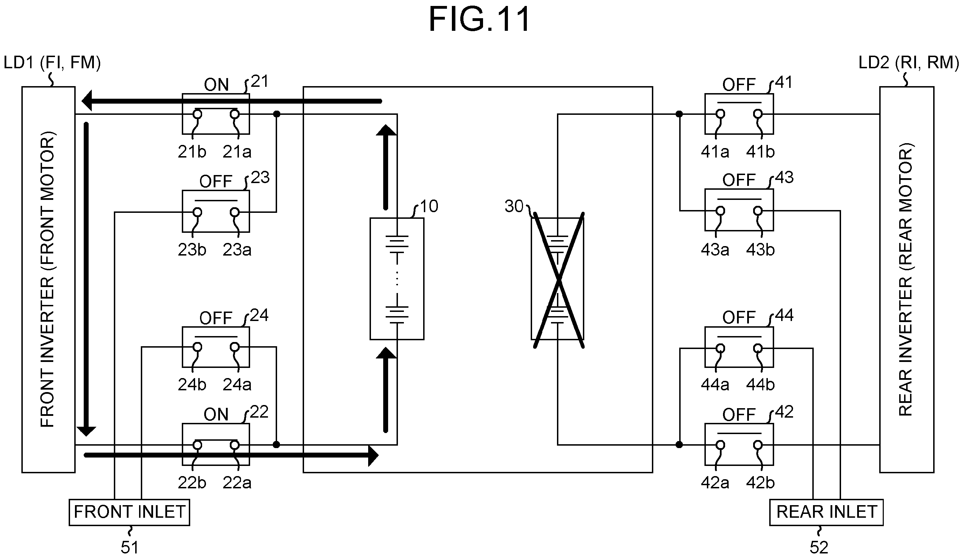

Next, an operation example in a case where the second battery 30 is abnormal will be described. FIG. 11 is a block diagram illustrating an operation example in a case where the second battery 30 according to the first embodiment is abnormal. The controller 70 controls the front power supply box 20 and the rear power supply box 40 to supply electric power from the first battery 10 to the first load unit LD1 and supply electric power from the second battery 30 to the second load unit LD2, thereby causing the vehicle V to travel. For example, in the front power supply box 20, the controller 70 turns the first main relay 21 and the second main relay 22 ON and turns the first charging relay 23 and the second charging relay 24 OFF to supply electric power from the first battery 10 to the first load unit LD1. In addition, in the rear power supply box 40, the controller 70 turns the first main relay 41 and the second main relay 42 ON and turns the first charging relay 43 and the second charging relay 44 OFF to supply electric power from the second battery 30 to the second load unit LD2. In this case, the first branch relay 61 and the second branch relay 62 are turned OFF. The controller 70 monitors voltages of the first battery 10 and the second battery 30 with a battery management system (BMS) or the like. For example, as illustrated in FIG. 11, in a case where a voltage of the second battery 30 is less than a predetermined reference voltage, the controller 70 determines that the second battery 30 is abnormal. In addition, in the rear power supply box 40, the controller 70 shuts off the electric power between the second battery 30 and the second load unit LD2 by turning the first main relay 41 and the second main relay 42 OFF, and causes the second supply system Q to stop. In this case, the controller 70 can cause the vehicle V to travel to a safe place by the electric power being continuously supplied from the first battery 10 to the first load unit LD1 through the first supply system P.

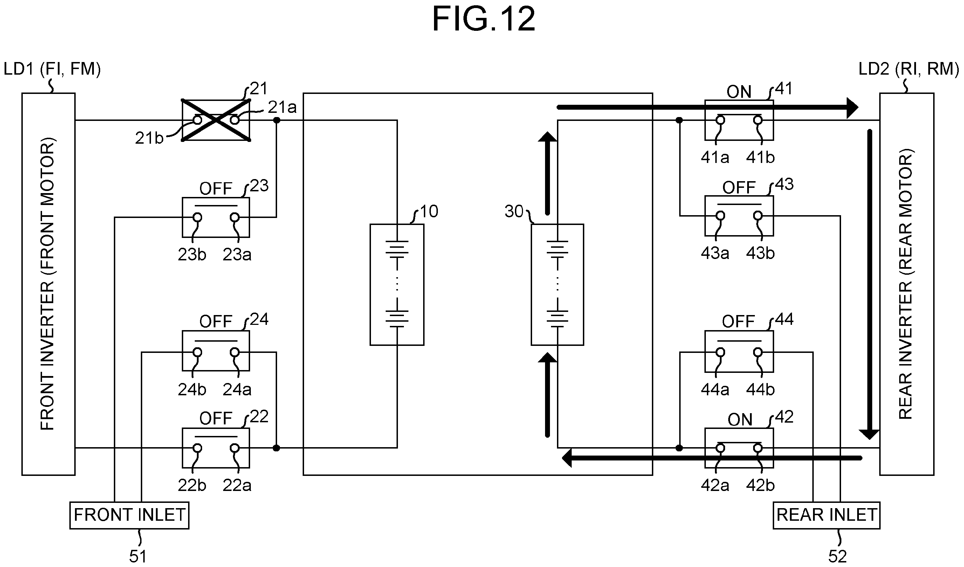

Next, an operation example in a case where the first main relay 21 fails will be described. FIG. 12 is a block diagram illustrating an operation example in a case where the first main relay 21 fails according to the first embodiment. The controller 70 monitors a current flowing through each of the relays of the front power supply box 20 and the rear power supply box 40 by a current sensor or the like. For example, as illustrated in FIG. 12, in a case where the current flows through the first main relay 21 even though the first main relay 21 is turned OFF, the controller 70 determines that the first main relay 21 is in an ON-fixed fail state in which ON is fixed without being turned OFF. In addition, in the front power supply box 20, the controller 70 shuts off the electric power between the first battery 10 and the first load unit LD1 by turning the second main relay 22 OFF, and causes the first supply system P to stop. In this case, the controller 70 can cause the vehicle V to travel to a safe place by the electric power being continuously supplied from the second battery 30 to the second load unit LD2 through the second supply system Q. In this way, the electric power supply system 1 configures the first supply system P and the second supply system Q independently of each other, so that even though either the first supply system P or the second supply system Q fails, the electric power is supplied to the load unit by the other one of the first supply system P or the second supply system Q, and as a result, the vehicle V can travel to a safe place.

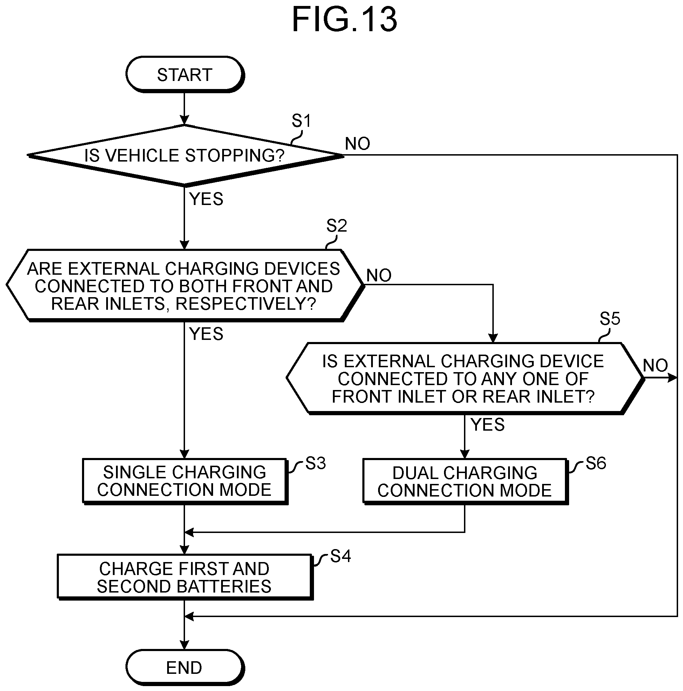

Next, a battery charging example of the electric power supply system 1 will be described. FIG. 13 is a flowchart illustrating a battery charging example of the electric power supply system 1 according to the first embodiment. In the electric power supply system 1, the controller 70 determines whether the vehicle V is stopping (Step S1), as illustrated in FIG. 13. For example, in a case where the main relays 21, 22, 41, and 42 are turned OFF, and the electric power supply from the first and second batteries 10 and 30 to the first and second load units LD1 and LD2 is shut off, the controller 70 determines that the vehicle V is stopping. Another method for determining whether the vehicle V is stopping may be used. In a case where the vehicle V is stopping (Yes at Step S1), the controller 70 determines whether the plug 108a of the external charging device 108 is connected to the front inlet 51 and the plug 107a of the external charging device 107 is connected to the rear inlet 52 (Step S2). For example, based on detection results from a first sensor that detects the connection between the plug 108a and the front inlet 51 and a second sensor that detects the connection between the plug 107a and the rear inlet 52, the controller 70 detects these connections. The controller 70 may detect the connections by another method. In a case where the external charging devices 107 and 108 are connected to both the front and rear inlets 51 and 52, respectively (Yes at Step S2), the controller 70 switches the connection relation to the single charging connection mode (Step S3). For example, as illustrated in FIG. 9, the controller 70 turns the first charging relay 23 and the second charging relay 24 ON and turns the first main relay 21 and the second main relay 22 OFF in the front power supply box 20, and turns the first charging relay 43 and the second charging relay 44 ON and turns the first main relay 41 and the second main relay 42 OFF in the rear power supply box 40, and turns the first branch relay 61 and the second branch relay 62 OFF in the charging branch box 60. In addition, the controller 70 charges the first battery 10 with electric power supplied from the external charging device 108 via the front inlet 51, charges the second battery 30 with electric power supplied from the external charging device 107 via the rear inlet 52 (Step S4), and ends the charging process.

At Step S2, in a case where the external charging devices 107 and 108 are not connected to both the front and rear inlets 51 and 52, respectively (No at Step S2), the controller 70 determines whether the plug 107a of the external charging device 107 is connected to any one of the front inlet 51 or the rear inlet 52 (Step S5). In a case where the plug 107a of the external charging device 107 is connected to any one of the front inlet 51 or the rear inlet 52 (Yes at Step S5), the controller 70 switches the connection relation to the dual charging connection mode (Step S6). For example, as illustrated in FIG. 10, the controller 70 turns the first charging relay 23 and the second charging relay 24 ON and turns the first main relay 21 and the second main relay 22 OFF in the front power supply box 20, and turns the first charging relay 43 and the second charging relay 44 ON and turns the first main relay 41 and the second main relay 42 OFF in the rear power supply box 40, and turns the first branch relay 61 and the second branch relay 62 ON in the charging branch box 60. In addition, the controller 70 charges the first battery 10 and the second battery 30 with electric power supplied from the external charging device 107 via the rear inlet 52 (front inlet 51) (Step S4), and ends the charging process. At Step S5, in a case where the plug 107a of the external charging device 107 is not connected to the front and rear inlets 51 and 52 (No at Step S5), the controller 70 determines that the charging process is not executed and ends the charging process.

As described above, the electric power supply system 1 according to the first embodiment includes the first supply system P, the second supply system Q, the front inlet 51, the rear inlet 52, and the charging branch box 60. The first supply system P includes the first battery 10 that is provided in the vehicle V and that can be charged and discharged with electric power and the front power supply box 20 that can switch the connection between the first battery 10 and the first load unit LD1, and can supply electric power from the first battery 10 to the first load unit LD1 via the front power supply box 20. The second supply system Q includes the second battery 30 that is provided in the vehicle V and that can be charged and discharged with electric power and the rear power supply box 40 that can switch the connection between the second battery 30 and the second load unit LD2 different from the first load unit LD1, and can supply electric power from the second battery 30 to the second load unit LD2 via the rear power supply box 40 independently of the first supply system P. The front inlet 51 can be connected to the external charging device 108 and can supply electric power from the external charging device 108 to at least the first battery 10 side. The rear inlet 52 can be connected to the external charging device 107 and can supply electric power from the external charging device 107 to at least the second battery 30 side. The charging branch box 60 is connected to each of the first supply system P, the second supply system Q, the front inlet 51, and the rear inlet 52, and can switch a mutual connection relation between the first supply system P, the second supply system Q, the front inlet 51, and the rear inlet 52.

With this configuration, since in the electric power supply system 1, a circuit system in which the first supply system P and the second supply system Q are independent of each other is configured, and the first supply system P, the second supply system Q, the front inlet 51, and the rear inlet 52 are then connected to the charging branch box 60, it is possible to suppress complicated switching of the mutual connection relations. Since the electric power supply system 1 includes the front power supply box 20 and the rear power supply box 40, it is possible to suppress the routing of the wire harness WH from the front side to the rear side of the vehicle V. Thereby, the connection distance of the wire harness WH that connects the front power supply box 20 and the rear power supply box 40 with each electronic component can be shorter than that of the electric power supply system 200 according to the comparative example. Therefore, since the electric power supply system 1 can have the simplified routing layout, it is possible to suppress deterioration of routing performance, lack of space in the vehicle, electric power loss due to wiring resistance, and the like. The electric power supply system 1 configures the first supply system P and the second supply system Q independently of each other, so that even though either the first supply system P or the second supply system Q fails, the electric power is supplied to the load unit by the other one of the first supply system P or the second supply system Q, and as a result, the vehicle V can travel to a safe place. Therefore, the electric power supply system 1 can realize a fail-safe operation and can improve redundancy (reliability). In the electric power supply system 1, the first supply system P and the second supply system Q have the same configuration, so that the parts can be shared, the manufacturing efficiency can be improved, and an increase in the manufacturing cost can be suppressed. As a result, the electric power supply system can be properly configured in the electric power supply system 1.

In the electric power supply system 1, the charging branch box 60 can switch the connection relation to the single charging connection mode or the dual charging connection mode. In the single charging connection mode, by the charging branch box 60 switching the connection relation between the first supply system P, the second supply system Q, the front inlet 51, and the rear inlet 52, the external charging devices 107 and 108 independently charge the first battery 10 with electric power from the front inlet 51 and independently charge the second battery 30 with electric power from the rear inlet 52 in a state in which the external charging devices 107 and 108 are connected to the front inlet 51 and the rear inlet 52, respectively. In the dual charging connection mode, in a state in which the external charging device 107 (108) is connected to either the front inlet 51 or the rear inlet 52, the charging branch box 60 can charge both the first battery 10 and the second battery 30 with the electric power from either one of the front inlet 51 or the rear inlet 52. With this configuration, in the case of the single charging connection mode, since in the electric power supply system 1, the first battery 10 is independently charged with the electric power from the front inlet 51, and the second battery 30 is independently charged with the electric power from the rear inlet 52, the charging time can be shorter than that of the dual charging connection mode.

In the electric power supply system 1, the first supply system P is provided on the front side of the vehicle V in the front-rear direction, and the second supply system Q is provided on the rear side with respect to the first supply system P in the front-rear direction. The front inlet 51 is provided on the front side of the vehicle V in the front-rear direction, and the rear inlet 52 is provided on the rear side with respect to the front inlet 51 in the front-rear direction. With this configuration, in the electric power supply system 1, the first supply system P and the front inlet 51 are connected to each other via the wire harness WH, so that it is possible to suppress an increase in the connection distance of the wire harness WH between the first supply system P and the front inlet 51. Similarly, in the electric power supply system 1, the second supply system Q and the rear inlet 52 are connected to each other via the wire harness WH, so that it is possible to suppress an increase in the connection distance of the wire harness WH between the second supply system Q and the rear inlet 52. As a result, the electric power supply system 1 can improve the routing performance of the wire harness WH.

### Second Embodiment

Next, an electric power supply system 1A according to a second embodiment will be described. In the description of the second embodiment, the same components as those of the electric power supply system 1 according to the first embodiment are designated by the same reference numerals, and detailed description thereof will not be repeated.

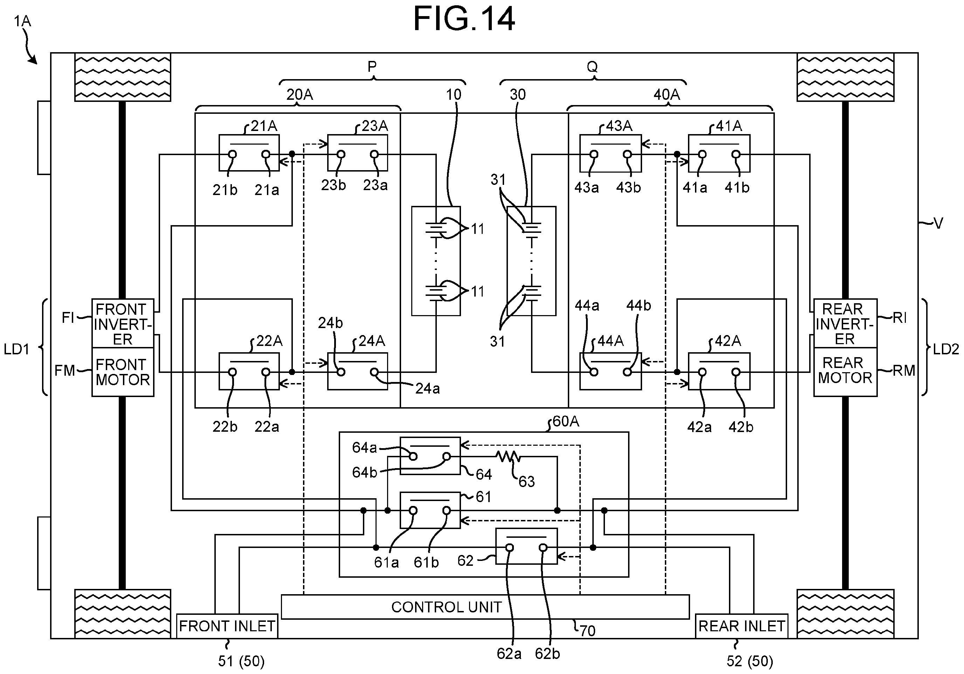

FIG. 14 is a block diagram illustrating a configuration example of the electric power supply system 1A according to the second embodiment. The electric power supply system 1A according to the second embodiment can perform a battery equalization process, and is different from the electric power supply system 1 according to the first embodiment in that electric power can be supplied from a normal battery to a first load unit LD1 and a second load unit LD2 in a case where one of the batteries is abnormal.

As illustrated in FIG. 14, the electric power supply system 1A according to the second embodiment includes a first supply system P, a second supply system Q, a charging port 50, a charging branch box 60A, and a controller 70.

The first supply system P includes a first battery 10 and a front power supply box 20A. The front power supply box 20A includes a first main relay 21A, a second main relay 22A, a first charging relay 23A, and a second charging relay 24A.

The first main relay 21A includes a first contact 21a and a second contact 21b. The first contact 21a is connected to a second contact 23b of the first charging relay 23A, and the second contact 21b is connected to a first terminal of a front inverter FI. The second main relay 22A includes a first contact 22a and a second contact 22b. The first contact 22a is connected to a second contact 24b of the second charging relay 24A, and the second contact 22b is connected to a second terminal of the front inverter FI. The first charging relay 23A includes a first contact 23a and a second contact 23b. The first contact 23a is connected to a positive electrode terminal of the first battery 10, and the second contact 23b is connected to a front inlet 51 and the charging branch box 60A. The second charging relay 24A includes a first contact 24a and a second contact 24b. The first contact 24a is connected to a negative electrode terminal of the first battery 10, and the second contact 24b is connected to the front inlet 51 and the charging branch box 60A.

The first supply system P configured as described above turns the first main relay 21A, the second main relay 22A, the first charging relay 23A, and the second charging relay 24A ON, so that electric power is supplied from the first battery 10 to the first load unit LD1 via the front power supply box 20A and is not supplied to the second load unit LD2.

The second supply system Q includes a second battery 30 and a rear power supply box 40A. The rear power supply box 40A includes a first main relay 41A, a second main relay 42A, a first charging relay 43A, and a second charging relay 44A.

The first main relay 41A includes a first contact 41a and a second contact 41b. The first contact 41a is connected to a second contact 43b of the first charging relay 43A, and the second contact 41b is connected to a first terminal of a rear inverter RI. The second main relay 42A includes a first contact 42a and a second contact 42b. The first contact 42a is connected to a second contact 44b of the second charging relay 44A, and the second contact 42b is connected to a second terminal of the rear inverter RI. The first charging relay 43A includes a first contact 43a and a second contact 43b. The first contact 43a is connected to a positive electrode terminal of the second battery 30, and the second contact 43b is connected to a rear inlet 52 and the charging branch box 60A. The second charging relay 44A includes a first contact 44a and a second contact 44b. The first contact 44a is connected to a negative electrode terminal of the second battery 30, and the second contact 44b is connected to the rear inlet 52 and the charging branch box 60A.

The second supply system Q configured as described above turns the first main relay 41A, the second main relay 42A, the first charging relay 43A, and the second charging relay 44A ON, so that electric power is supplied from the second battery 30 to the second load unit LD2 via the rear power supply box 40A and is not supplied to the first load unit LD1.

Next, the charging branch box 60A will be described. The charging branch box 60A includes a first branch relay 61, a second branch relay 62, a current limiting element 63, and a third branch relay 64.

The first branch relay 61 includes a first contact 61a and a second contact 61b. The first contact 61a is connected between the second contact 23b of the first charging relay 23A of the front power supply box 20A and the first contact 21a of the first main relay 21A. The second contact 61b is connected between the second contact 43b of the first charging relay 43A of the rear power supply box 40A and the first contact 41a of the first main relay 41A.

The second branch relay 62 includes a first contact 62a and a second contact 62b. The first contact 62a is connected between the second contact 24b of the second charging relay 24A of the front power supply box 20A and the first contact 22a of the second main relay 22A. The second contact 62b is connected between the second contact 44b of the second charging relay 44A of the rear power supply box 40A and the first contact 42a of the second main relay 42A.

The current limiting element 63 is an element (resistor) that limits a current. The third branch relay 64 is connected in series with the current limiting element 63, and energizes or shuts off a current flowing through the current limiting element 63. The third branch relay 64 and the current limiting element 63 are connected in parallel to the first branch relay 61.

The front inlet 51 has a first terminal connected between the second contact 23b of the first charging relay 23A of the front power supply box 20A and the first contact 21a of the first main relay 21A, and has a second terminal connected between the second contact 24b of the second charging relay 24A of the front power supply box 20A and the first contact 22a of the second main relay 22A.

The rear inlet 52 has a first terminal connected between the second contact 43b of the first charging relay 43A of the rear power supply box 40A and the first contact 41a of the first main relay 41A, and has a second terminal connected between the second contact 44b of the second charging relay 44A of the rear power supply box 40A and the first contact 42a of the second main relay 42A.

The charging branch box 60A configured as described above can switch the connection relation to an independent supplying mode or a mutual interchange mode by switching the connection relation between the first supply system P, the second supply system Q, the front inlet 51, and the rear inlet 52. Here, the independent supplying mode is a mode in which the first supply system P and the second supply system Q are not connected to each other, and electric power is not supplied from one of the first supply system P or the second supply system Q to the other. The mutual interchange mode is a mode in which the first supply system P and the second supply system Q are connected to each other, and electric power is supplied from one of the first supply system P or the second supply system Q to the other.

The charging branch box 60A switches the connection relation to the independent supplying mode in which electric power is not supplied from one of the first supply system P or the second supply system Q to the other by turning the first branch relay 61 and the second branch relay 62 OFF, for example. In the independent supplying mode, the first main relay 21A, the second main relay 22A, the first charging relay 23A, and the second charging relay 24A in the front power supply box 20A are turned ON, and the first main relay 41A, the second main relay 42A, the first charging relay 43A, and the second charging relay 44A in the rear power supply box 40A are turned ON. In the independent supplying mode, electric power is independently supplied from the first battery 10 of the first supply system P to the first load unit LD1, and independently supplied from the second battery 30 of the second supply system Q to the second load unit LD2.

The charging branch box 60A switches the connection relation to the mutual interchange mode in which electric power is supplied from one of the first supply system P or the second supply system Q to the other by turning the first branch relay 61 and the second branch relay 62 ON.

In the mutual interchange mode, for example, the charging branch box 60A switches the first battery 10 of the first supply system P and the second battery 30 of the second supply system Q to be connected in parallel (battery equalization process). In addition, in the mutual interchange mode, in a case where one of the batteries is abnormal, the charging branch box 60A turns the first branch relay 61 and the second branch relay 62 ON to switch the connection relation so that electric power can be supplied from the normal battery to the first and second load units LD1 and LD2 (battery abnormal process).

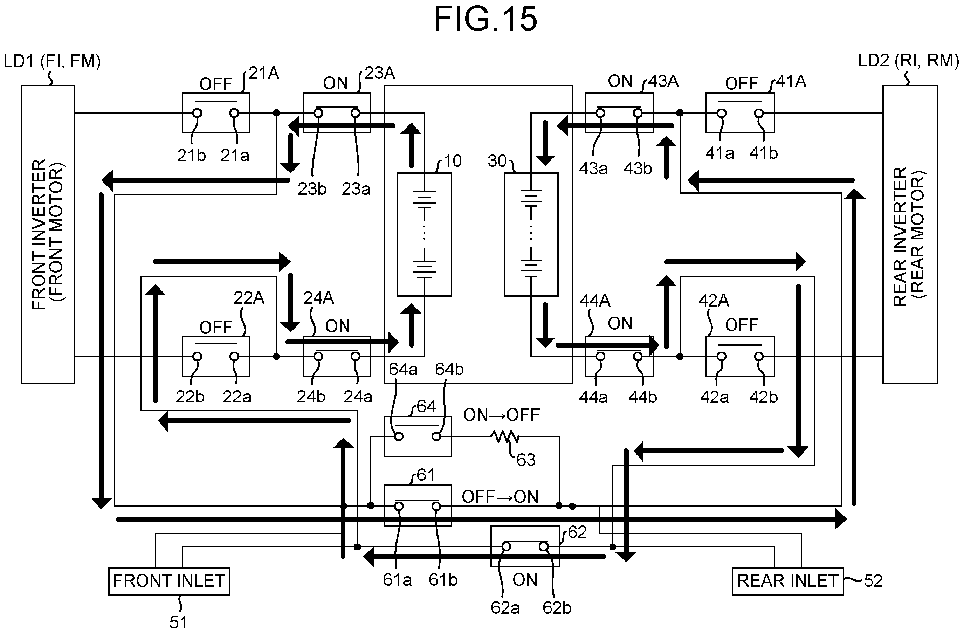

Next, the battery equalization process according to the electric power supply system 1A will be described in detail. FIG. 15 is a block diagram illustrating an equalization process of the first battery 10 and the second battery 30 according to the second embodiment. In a case where the battery equalization process is executed, as illustrated in FIG. 15, the controller 70 turns the first main relay 21A and the second main relay 22A OFF, turns the first charging relay 23A and the second charging relay 24A ON, turns the first main relay 41A and the second main relay 42A OFF, turns the first charging relay 43A and the second charging relay 44A ON, turns the first branch relay 61 OFF, and turns the second branch relay 62 and the third branch relay 64 ON. Therefore, since the controller 70 can connect the first battery 10 and the second battery 30 in parallel via the current limiting element 63, an overcurrent flowing between the first battery 10 and the second battery 30 can be suppressed. Next, the controller 70 turns the third branch relay 64 OFF and turns the first branch relay 61 ON to connect the first battery 10 and the second battery 30 in parallel without the current limiting element 63 (mutual interchange mode). Then, the controller 70 can cause a current to flow from one of the first battery 10 or the second battery 30, which has a relatively large charging amount, to the other of the first battery 10 or the second battery 30, which has a relatively small charging amount, and can equalize the charging amounts of the first battery 10 and the second battery 30.

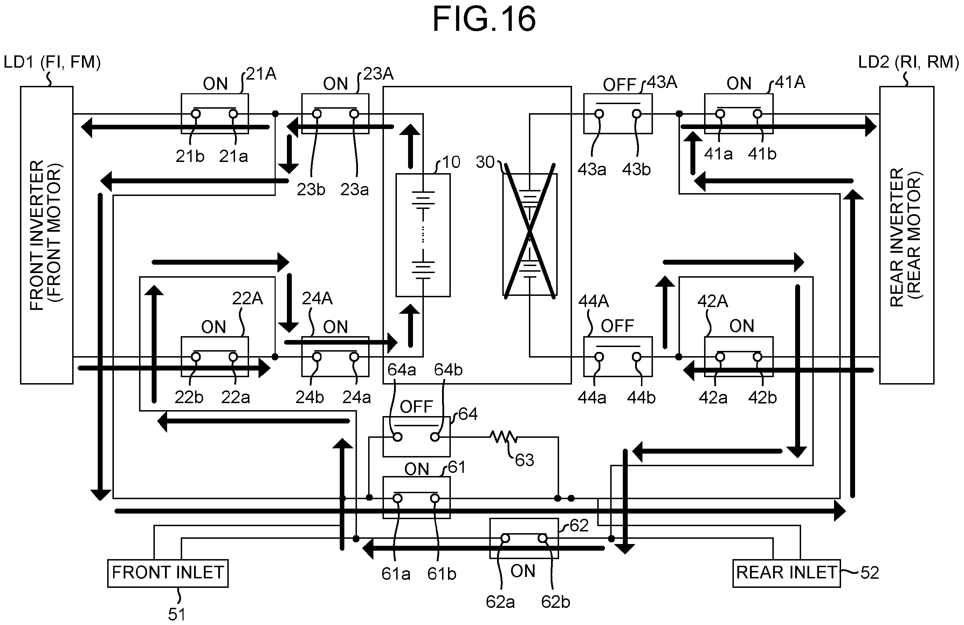

Next, the battery abnormal process according to the electric power supply system 1A will be described in detail. FIG. 16 is a block diagram illustrating an operation example in a case where the second battery 30 according to the second embodiment is abnormal. The controller 70 controls the front power supply box 20A and the rear power supply box 40A to supply electric power from the first battery 10 to the first load unit LD1 and supply electric power from the second battery 30 to the second load unit LD2, thereby causing the vehicle V to travel. For example, in the front power supply box 20A, the controller 70 turns the first main relay 21A, the second main relay 22A, the first charging relay 23A, and the second charging relay 24A ON to supply electric power from the first battery 10 to the first load unit LD1. In addition, in the rear power supply box 40A, the controller 70 turns the first main relay 41A, the second main relay 42A, the first charging relay 43A, and the second charging relay 44A ON to supply electric power from the second battery 30 to the second load unit LD2. In this case, the first branch relay 61, the second branch relay 62, and the third branch relay 64 are turned OFF. The controller 70 monitors voltages of the first battery 10 and the second battery 30 with a battery management system (BMS) or the like. In a case where a voltage of the second battery 30 is less than a predetermined reference voltage, the controller 70 determines that the second battery 30 is abnormal. For example, as illustrated in FIG. 16, in the rear power supply box 40A, the controller 70 shuts off the electric power between the second battery 30 and the second load unit LD2 by turning the first charging relay 43A and the second charging relay 44A OFF. The controller 70 connects the first battery 10 and the second load unit LD2 by turning the first branch relay 61 and the second branch relay 62 ON to supply electric power from the first battery 10 to the second load unit LD2 instead of the second battery 30 (mutual interchange mode). In this case, the controller 70 also supplies electric power from the first battery 10 to the first load unit LD1.

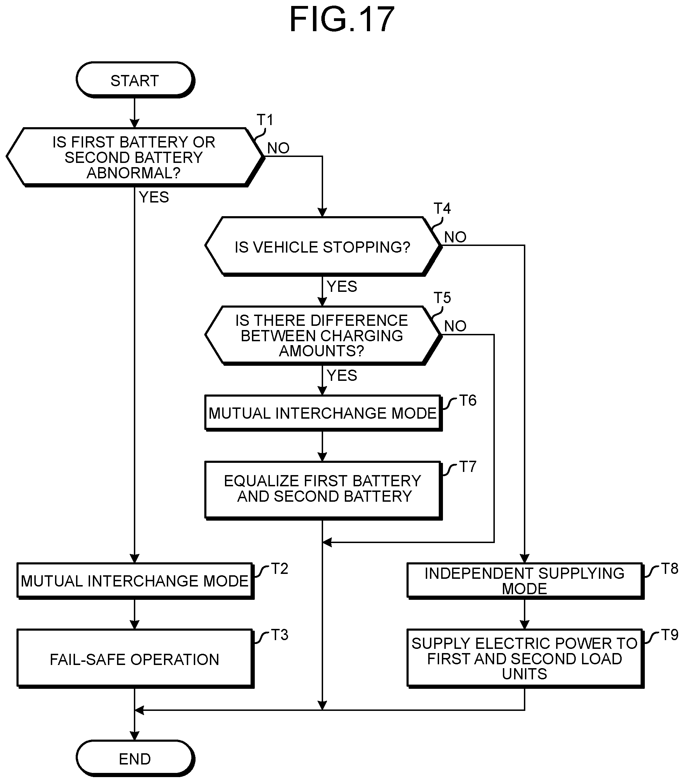

Next, an operation example of the electric power supply system 1A will be described. FIG. 17 is a flowchart illustrating an operation example of the electric power supply system 1A according to the second embodiment. In the electric power supply system 1A, as illustrated in FIG. 17, the controller 70 determines whether the first battery 10 or the second battery 30 is abnormal (Step T1). In a case where the first battery 10 or the second battery 30 is abnormal (Yes at Step T1), the controller 70 switches the connection relation to the mutual interchange mode (Step T2). In a case where one of the batteries is abnormal, for example, the controller 70 turns the first branch relay 61 and the second branch relay 62 ON to switch the connection relation so that electric power can be supplied from the normal battery to the first and second load units LD1 and LD2, performs the fail-safe operation (Step T3), and ends the process. At Step T1, in a case where the first battery 10 and the second battery 30 are normal (No at Step T1), the controller 70 determines whether the vehicle V is stopping (Step T4). In a case where the vehicle V is stopping (Yes at Step T4), the controller 70 determines whether there is a difference between the charging amount of the first battery 10 of the first supply system P and the charging amount of the second battery 30 of the second supply system Q (Step T5). The controller 70 determines whether there is a difference in each of the charging amounts of the first and second batteries 10 and 30 acquired by, for example, a battery management system (BMS) or the like. In a case where the charging amount of the first battery 10 is different from the charging amount of the second battery 30 (Yes at Step T5), the controller 70 switches the connection relation to the mutual interchange mode (Step T6). The controller 70 switches the connection between the first battery 10 of the first supply system P and the second battery 30 of the second supply system Q into, for example, a parallel connection. Then, the controller 70 causes a current to flow from one of the first battery 10 or the second battery 30, which has a relatively large charging amount, to the other of the first battery 10 or the second battery 30, which has a relatively small charging amount, equalizes the charging amounts of the first battery 10 and the second battery 30 (Step T7), and ends the process. At Step T4, in a case where the vehicle V is not stopped (No at Step T4), the controller 70 switches the connection relation to the independent supplying mode (Step T8). The controller 70 switches the connection relation to the independent supplying mode in which electric power is not supplied from one of the first supply system P or the second supply system Q to the other by turning the first branch relay 61 and the second branch relay 62 OFF, for example. Next, the controller 70 supplies electric power to the first load unit LD1 and the second load unit LD2 (Step T9). In the independent supplying mode, for example, the controller 70 causes electric power to be independently supplied from the first battery 10 of the first supply system P to the first load unit LD1, and independently supplied from the second battery 30 of the second supply system Q to the second load unit LD2, and ends the process. At Step T5, in a case where the charging amount of the first battery 10 is not different from the charging amount of the second battery 30 (No at Step T5), the controller 70 skips the battery equalization process and ends the process.

As described above, in the electric power supply system 1A according to the second embodiment, the charging branch box 60A can switch between the independent supplying mode in which the first supply system P and the second supply system Q are not connected to each other and electric power is not supplied from one of the first supply system P or the second supply system Q to the other and the mutual interchange mode in which the first supply system P and the second supply system Q are connected to each other and electric power is supplied from one of the first supply system P or the second supply system Q to the other, by switching the connection relation between the first supply system P, the second supply system Q, the front inlet 51, and the rear inlet 52. With this configuration, the electric power supply system 1A can equalize the charging amounts of the first battery 10 and the second battery 30, and can suppress a decrease in the charging efficiency. In a case where one of the first battery 10 or the second battery 30 is abnormal, the electric power supply system 1A can supply electric power from the other of the normal first battery 10 or second battery 30 to the first and second load units LD1 and LD2, and cause the vehicle V to travel to a safe place.

### Modified Example

In the above description, the example in which the first supply system P is provided on the front side of the vehicle V in the front-rear direction and the second supply system Q is provided on the rear side with respect to the first supply system P has been described, but the dispositions of the first supply system P and the second supply system Q are not limited thereto, and may be disposed in other ways.

The example in which the front inlet 51 is provided on the front side of the vehicle V in the front-rear direction and the rear inlet 52 is provided on the rear side with respect to the front inlet 51 has been described, but the dispositions of the front inlet 51 and the rear inlet 52 are not limited thereto, and may be disposed in other ways.

The example in which the electric power supply system 1 is mounted on, for example, the electric vehicles (EVs) has been described, but the electric power supply system 1 is not limited thereto, and for example, the electric power supply system 1 may be mounted on electric vehicles such as a hybrid electric vehicle (HEV) and a plug-in hybrid electric vehicle (PHEV).

The example in which the front power supply box 20 is disposed on the side surface of the front side of the battery pack BP1 having an intermediate capacity has been described, but the front power supply box 20 is not limited thereto, and the front power supply box 20 may be disposed on an upper surface of the front side of the battery pack BP1 having an intermediate capacity. Similarly, the example in which the front power supply box 20 is disposed on the side surface of the front side of the battery pack BP2 having a large capacity has been described, but the front power supply box 20 is not limited thereto, and the front power supply box 20 may be disposed on an upper surface of the front side of the battery pack BP2 having a large capacity.

The example in which the rear power supply box 40 is disposed on the side surface of the rear side of the battery pack BP1 having an intermediate capacity has been described, but the rear power supply box 40 is not limited thereto, and the rear power supply box 40 may be disposed on an upper surface of the rear side of the battery pack BP1 having an intermediate capacity. Similarly, the example in which the rear power supply box 40 is disposed on the side surface of the rear side of the battery pack BP2 having a large capacity has been described, but the rear power supply box 40 is not limited thereto, and the rear power supply box 40 may be disposed on an upper surface of the rear side of the battery pack BP2 having a large capacity.

An electric power supply system according to the present embodiment includes a connection switching unit capable of switching the mutual connection relation between a first supply system, a second supply system, a first charging inlet, and a second charging inlet, so that the complicated switching of the mutual connection relation can be suppressed, and as a result, an electric power supply system can be properly configured.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An electric power supply system (1, 1A) comprising:
a first supply system (P) including a first battery (10) provided in a vehicle (V) and capable of being charged and discharged with electric power, and a first battery switching unit (20) capable of switching a connection between the first battery (10) and a first load unit (LD1), electric power being capable of supplying from the first battery (10) to the first load unit (LD1) via the first battery switching unit (20);
a second supply system (Q) including a second battery (30) provided in the vehicle (V) and capable of being charged and discharged with electric power, and a second battery switching unit (40) capable of switching a connection between the second battery (30) and a second load unit (LD2) different from the first load unit (LD1), electric power being capable of supplying from the second battery (30) to the second load unit (LD2) via the second battery switching unit (40) independently of the first supply system (P);
a first charging inlet (51) capable of connecting to a charger (108) and capable of supplying electric power from the charger (108) to at least a side of the first battery (10) ;
a second charging inlet (52) capable of connecting to a charger (107) and capable of supplying electric power from the charger (107) to at least a side of the second battery (30); and
a connection switching unit (60) to which each of the first supply system (P), the second supply system (Q), the first charging inlet (51), and the second charging inlet (52) is connected and that is capable of switching a mutual connection relation between the first supply system (P), the second supply system (Q), the first charging inlet (51), and the second charging inlet (52).

2. The electric power supply system (1, 1A) according to claim 1, wherein
the connection switching unit (60) is capable of switching between a single charging connection mode and a dual charging connection mode by switching a connection relation between the first supply system (P), the second supply system (Q), the first charging inlet (51), and the second charging inlet (52),
in the single charging connection mode, in a state of the charger (107, 108) being connected to both the first charging inlet (51) and the second charging inlet (52), the first battery (10) is singly charged with electric power supplied from the first charging inlet (51) and the second battery (30) is singly charged with electric power supplied from the second charging inlet (52), and
in the dual charging connection mode, in a state of the charger (107) being connected to any one of the first charging inlet (51) and the second charging inlet (52), both the first battery (10) and the second battery (30) are charged with electric power supplied from the one.

3. The electric power supply system (1, 1A) according to claim 1 or 2, wherein
the connection switching unit (60) is capable of switching between an independent supplying mode and a mutual interchange mode by switching a connection relation between the first supply system (P), the second supply system (Q), the first charging inlet (51), and the second charging inlet (52),
in the independent supplying mode, the first supply system (P) and the second supply system (Q) are not connected to each other and electric power is not supplied from one of the first supply system (P) and the second supply system (Q) to the other, and
in the mutual interchange mode, the first supply system (P) and the second supply system (Q) are connected to each other and electric power is supplied from one of the first supply system (P) and the second supply system (Q) to the other.

4. The electric power supply system (1, 1A) according to any one of claims 1 to 3, wherein
the first supply system (P) is provided on a front side in a front-rear direction of the vehicle (V),
the second supply system (Q) is provided on a rear side with respect to the first supply system (P) in the front-rear direction,
the first charging inlet (51) is provided on a front side in the front-rear direction of the vehicle (V), and
the second charging inlet (52) is provided on a rear side with respect to the first charging inlet (51) in the front-rear direction.
